# EUROPEAN PATENT APPLICATION

(11) **EP 2 846 171 A1**
(43) Date of publication of application: **11.03.2015**
(21) Application number: 14162400.7
(22) Date of filing: 28.03.2014
(51) Int. Cl.: G01S 13/88, G01S 13/42, H01Q 3/22

(54) **Millimetre wave three dimensional holographic scan imaging apparatus and inspecting method thereof**

(30) Priority: 15.08.2013 CN 201310356862
(71) Applicant: Nuctech Company Limited, Haidian District, Beijing 100084 (CN); Tsinghua University, Haidian District Beijing 100084 (CN)
(72) Inventor: Chen, Zhiqiang, Haidian District, Beijing 100084 (CN); Li, Yuanjing, Haidian District, Beijing 100084 (CN); Zhao, Ziran, Haidian District, Beijing 100084 (CN); Wu, Wanlong, Haidian District, Beijing 100084 (CN); Shen, Zongjun, Haidian District, Beijing 100084 (CN); Liu, Yinong, Haidian District, Beijing 100084 (CN); Zhang, Li, Haidian District, Beijing 100084 (CN); Ding, Xianli, Haidian District, Beijing 100084 (CN)
(74) Representative: Carpmaels & Ransford LLP

(57) **Abstract**

The present invention discloses a millimetre wave three dimensional holographic scan imaging apparatus and a method for inspecting an object to be inspected using the same. The apparatus comprises a millimetre wave transceiver module comprising a millimetre wave transceiver antenna array for transmitting and receiving a millimetre wave signal; a guide rail device, to which the millimetre wave transceiver module is connected in slidable form, such that the millimetre wave transceiver module is moveable along the guide rail device to perform a scan on an object to be inspected; wherein the scan performed by the millimetre wave transceiver module is a plane scan. The apparatus and the method as described above can reduce the length of the millimetre wave transceiver antenna array and thus the cost thereof.

## Description

### CROSS-REFERENCE TO RELATED APPLICATION

This application claims the benefit of Chinese Patent Application No. 201310356862.3 filed on August 15, 2013 in the State Intellectual Property Office of China, the disclosure of which is incorporated herein by reference.

### BACKGROUND OF THE INVENTION

### 1. Field of the Invention

The present invention generally relates to a technical field of human body security inspection, in particular to a millimetre wave three dimensional holographic scan imaging apparatus and a method for inspecting an object to be inspected using the same.

### 2. Description of the Related Art

The imaging safety inspection technology for an object to be inspected such as a human body or an article used widely at present mainly comprises X ray imaging technology and millimetre wave imaging technology. The millimetre wave imaging technology becomes more popular in these years. It can in principle be classified into passive millimetre wave imaging technology and active millimetre wave imaging technology. The holographic imaging technology is the most important form of the active millimetre wave imaging technology.

In the active millimetre wave three dimensional holographic imaging technology for human body safety inspection, the cylindrical scan imaging technology has been used widely. However, the cylindrical scan imaging apparatus has a huge volume and a complex algorithm which is derived by approximation processes in theory, and thus its imaging accuracy is limited. Further, a cylindrical scan may only use a vertical antenna array which has a large length and too many antenna units, thus increasing the cost of apparatus.

In view of this, there indeed is a need to provide a new type millimetre wave three dimensional holographic scan imaging apparatus and a method for inspecting an object to be inspected using the same.

### SUMMARY OF THE INVENTION

An object of the present invention is to provide a millimetre wave three dimensional holographic scan imaging apparatus which can perform the millimetre wave three dimensional holographic scan imaging rapidly and efficiently and can simplify the structure thereof.

A further object of the present invention is to provide a method for inspecting a human body or an article using the millimetre wave three dimensional holographic scan imaging apparatus which can perform the inspection globally, conveniently and fast. It is in particular suitable to various applications of security inspection for a human body or an article.

To this end, the present invention may be implemented by the follows.

In accordance with one aspect of the present invention, it provides a millimetre wave three dimensional holographic scan imaging apparatus, comprising:
a millimetre wave transceiver module comprising a millimetre wave transceiver antenna array for transmitting and receiving a millimetre wave signal;
a guide rail device, to which the millimetre wave transceiver module is connected in slidable form, such that the millimetre wave transceiver module is moveable along the guide rail device to perform a scan on an object to be inspected;
wherein the scan performed by the millimetre wave transceiver module is a plane scan.

Further, a transmitting face and a receiving face of the millimetre wave transceiver antenna array both may be substantially located onto one same plane, wherein the plane is rectangle-shaped or square-shaped in a cross-sectional view.

Moreover, the millimetre wave transceiver module may further comprise a millimetre wave transceiver circuit connected to the millimetre wave transceiver antenna array.

Preferably, the millimetre wave transceiver antenna array may comprise at least one row of millimetre wave transmitting antennas and at least one row of millimetre wave receiving antennas. More preferably, the row of millimetre wave transmitting antennas comprises a plurality of millimetre wave transmitting antennas spaced from each other with a first predetermined distance in the row, and the row of millimetre wave receiving antennas comprises a plurality of millimetre wave receiving antennas spaced from each other with a second predetermined distance in the row, wherein the first predetermined distance is identical with or different from the second predetermined distance.

In an embodiment, when the first predetermined distance is identical with the second predetermined distance, the millimetre wave transmitting antennas in the row of the millimetre wave transmitting antennas and the corresponding millimetre wave receiving antennas in its adjacent row of the millimetre wave receiving antennas may be staggered or aligned, in a direction perpendicular to an extending direction of the row of the millimetre wave transmitting and/or receiving antennas.

In another embodiment, the millimetre wave three dimensional holographic scan imaging apparatus may further comprise a driver, by which the millimetre wave transceiver module is connected with the guide rail device, thereby driving the millimetre wave transceiver module to move along the guide rail device.

In a further embodiment, the millimetre wave three dimensional holographic scan imaging apparatus may further comprise a driver, wherein the millimetre wave transceiver module is directly connected with the guide rail device, and the driver drives the millimetre wave transceiver module to move along the guide rail device, by other means.

Specifically, the guide rail device may be arranged along a vertical direction, a horizontal direction or in any oblique direction; and accordingly the millimetre wave transceiver module moves along a vertical direction, a horizontal direction or in any oblique direction.

Further, the guide rail device may be composed of one guide rail or a plurality of guide rails parallel to each other.

In an example, the millimetre wave three dimensional holographic scan imaging apparatus may further comprise:
a data processing device communicated by wire or wireless to the millimetre wave transceiver module to receive scan data from the millimetre wave transceiver module and to generate a millimetre wave holographic image; and
a display device communicated to the data processing device to receive and display the millimetre wave holographic image from the data processing device.

Specifically, the data processing device may be configured to generate a control signal and transmit it to the driver to allow the driver to drive the millimetre wave transceiver module to move; or the millimetre wave three dimensional holographic scan imaging apparatus may further comprise a separate controller with respect to the data processing device, the separate controller configured to generate a control signal and transmit it to the driver to allow the driver to drive the millimetre wave transceiver module to move.

In accordance with another aspect of the present invention, it provides a method for inspecting an object to be inspected using a millimetre wave three dimensional holographic scan imaging apparatus as described above, comprising:
locating the object to be inspected at an inspection position and setting a millimetre wave transceiver module at its scan beginning position;
driving the millimetre wave transceiver module to move from its scan beginning position to its scan end position along a guide rail device continuously or discontinuously to finish scanning to the object to be inspected;
transmitting data sampled by the millimetre wave transceiver module during the scanning to a data processing device, in the scanning and/or after the scanning; and
processing the data received from the millimetre wave transceiver module using the data processing device to generate a millimetre wave holographic image of the object to be inspected,
wherein the scanning performed by the millimetre wave transceiver module is a plane scan.

In an implementation, during the scanning, the millimetre wave transceiver module may discontinuously move, wherein as for the same position where the millimetre wave transceiver module is located, two dimensional scanning for the object to be inspected is performed by changing transmitting frequency of the millimetre wave or altering the current transmitting or receiving antenna in the millimetre wave transceiver module. The whole three dimensional scanning data are obtained by a combination of the two dimensional scanning and the discontinuous movement of the millimetre wave transceiver module.

In another implementation, during the scanning, the millimetre wave transceiver module may continuously move, and a three dimensional scanning is performed several times for the object to be inspected, by changing transmitting frequency of the millimetre wave, and altering the current transmitting and/or receiving antenna in the millimetre wave transceiver module, thereby obtaining the whole three dimensional scanning data from results of the several scanning.

Preferably, the millimetre wave transceiver module may transmit information which is obtained by processing the millimetre wave signal received from one or more receiving antennas in the millimetre wave transceiver antenna array, to the data processing device in real time, or transmit the information to the data processing device piecewise after it is buffered, or transmit the information to the data processing device at one time after it is buffered.

In an example, after generating the millimetre wave holographic image of the object to be inspected, an automatic identification on whether the object to be inspected entrains suspected objects and on the position of the suspected objects is carried out and the identified results are outputted.

On basis of at least one of the above aspects, the plane scan can be performed for the object to be inspected. Therefore, correspondingly, the millimetre wave three dimensional holographic scan imaging apparatus has a relatively small volume. In addition, the imaging apparatus can be made in a rectangle or square shape, and thus has a reduced footprint and adapts for many occasions.

Moreover, the millimetre wave three dimensional holographic scan imaging apparatus in accordance with the present invention has simple and accurate image reconstruction algorithm, thereby improving the imaging speed and accuracy. Further, due to the use of the plane scan type inspection means, it is possible to reduce the length of the antenna array in the millimetre wave transceiver module, and save the cost thereof.

### BRIEF DESCRIPTION OF THE DRAWINGS

These and other aspects as well as advantages of the present invention will become apparent and readily understood from the description of the preferred embodiments taking in conjunction with the accompanying drawings, in which:
Figure 1 shows schematically a construction of a millimetre wave three dimensional holographic scan imaging apparatus according to an embodiment of the present invention; and
Figure 2 is a structural schematic view of the millimetre wave transceiver module as shown in figure 1.

### DETAILED DESCRIPTION OF THE EMBODIMENTS

Technical solutions of the present invention will be described hereinafter in more detail by the way of embodiment with reference to figures of the attached drawings, wherein the same or like reference numerals refer to the same or like elements throughout the specification. The explanation to the embodiment of the present invention with referring to the accompanying drawings is intended to interpret the general inventive concept of the present invention, rather than being construed as a limiting to the present invention.

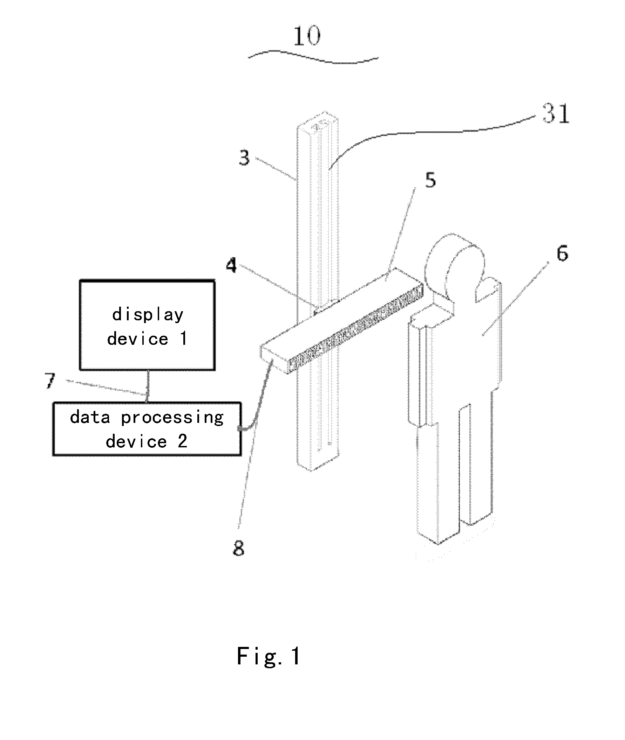

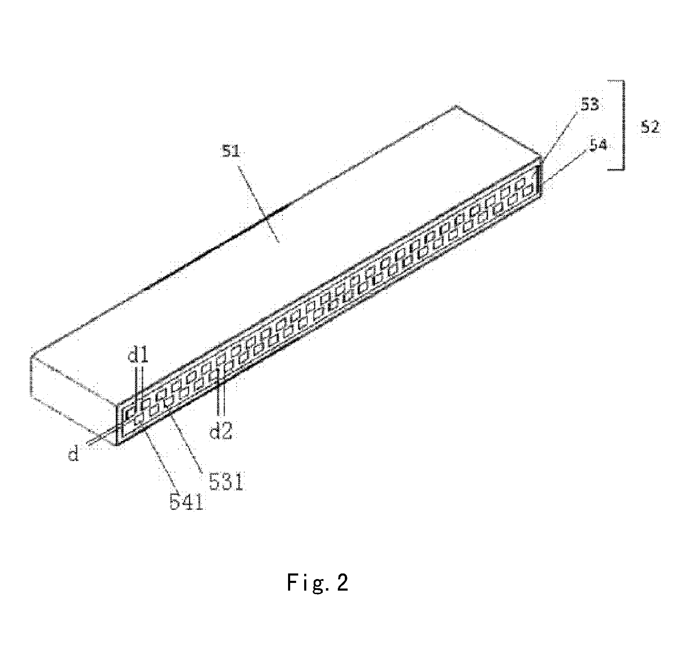

Fig. 1 shows schematically a millimetre wave three dimensional holographic scan imaging apparatus 100 according to an embodiment of the present invention. It may include a millimetre wave transceiver module 5, a guide rail device 3, and a driver 4 (to be provided if necessary). The millimetre wave transceiver module 5 comprises a millimetre wave transceiver antenna array 52(as shown in figure 2) for transmitting and receiving a millimetre wave signal. And the millimetre wave transceiver module 5 is connected in slidable form to the guide rail device 3, such that the millimetre wave transceiver module 5 can move along the guide rail device 3 to perform a scan on an object 6 to be inspected.

That is, the millimetre wave three dimensional holographic scan imaging apparatus 10 in accordance with the present invention may scan a surface of the object 6 to be inspected at a time, for example a front face, a side face and a back face of the object 6 to be inspected. If it is necessary to scan a plurality of faces of the object 6 to be inspected, then it is accomplished by simply moving the millimetre wave three dimensional holographic scan imaging apparatus, or turning the object 6 to be inspected around or overturning the object 6 to be inspected. In this way, the manufacturing cost of the millimetre wave three dimensional holographic scan imaging apparatus 10 can be greatly reduced, because it is not necessary to provide too many millimetre wave transceiver antenna arrays and complicated rotational equipments, just as the cylindrical scan in the prior art.

The scanning which is performed by the millimetre wave transceiver module is a plane scan, rather than the cylindrical scan. As compared to the cylindrical scan, the millimetre wave holographic imaging algorithm necessary for the plane scan is relatively simple and more accurate. Furthermore, the plane scan can be performed along any scanning directions (for example, a vertical, horizontal or oblique direction, and so on). In contrast, the cylindrical scan can only be performed along arched traces in a horizontal direction. Therefore, with the plane scan, the technical solution of the present invention has a larger flexibility than that with the cylindrical scan in the prior art.

As shown in figure 1, a driver 4 can be provided to connect the millimetre wave transceiver module 5 with the guide rail device 3. In this way, the millimetre wave transceiver module 5 along with the driver 4 can slide along a guide rail 31 in the guide rail device 3 from one end thereof to the other end thereof, under the constraint of the guide rail 31. But this case is not necessary. In other words, it is possible to directly connect the millimetre wave transceiver module 5 with the guide rail 31 in the guide rail device 3, without the driver 4. In this case, the millimetre wave transceiver module 5 can slide along the guide rail 31 by mechanical devices (not shown) such as a pulley, a motor connected therewith. It should be explained herein that the driver 4 or other type of drivers such as the pulley, the motor can be directed controlled by a data processing device 2 as described below, or is indirectly controlled by the data processing device 2 via an electric control system.

Although the scanning direction of the millimetre wave transceiver module 5 as shown in figure 1 is a vertical direction (up and down direction of the page in figure 1), the skilled person in the art should understand that this is not necessary, that is, the scanning direction can be horizontal or oblique. Of course, the scanning direction of the millimetre wave transceiver module 5 can be varied by changing the extending direction of the guide rail device 3. Specifically, as shown in figure 1, when the extending direction of the guide rail 3 is the vertical direction, the millimetre wave transceiver module 5 must scan along the vertical direction. Please be noted that a base (not shown in figures) housing the guide rail device 3 can help to achieve the extending of the guide rail 31 of the guide rail device 3 along the vertical direction, the horizontal direction, or other any oblique direction. Accordingly, the plane scan of the millimetre wave transceiver module 5 along the vertical direction, the horizontal direction, or any other oblique direction is achieved herein.

Typically, since the length of the millimetre wave transceiver antenna array 52 in the millimetre wave transceiver module 5 is limited, in practice, it is often desired to determine the scanning direction depending on the object to be scanned, especially for an elongated object, in order to make full use of the length of the millimetre wave transceiver antenna array 52 for saving the cost thereof. For example, the scanning direction can be set to be variable, so as to adjust the scanning direction as required in a manner as described above, and this cannot be accomplished by the cylindrical scan.

Of course, in order to perform the plane scan, a transmitting face and a receiving face of the millimetre wave transceiver antenna array 52 are located at one same plane (i.e., the plane facing to the object 6 to be inspected as shown in figure 1); and the plane is rectangular or square in the view of figure 2. Of course, it is possible to dispose the shapes of the transmitting face and the receiving face as desired, rather than limiting to the specific shape as described above.

As shown in figure 2, the millimetre wave transceiver module 5 further includes a millimetre wave transceiver circuit 51 connected with and cooperating with the millimetre wave transceiver antenna array 52. Specifically, the millimetre wave transceiver circuit 51 is disposed within the millimetre wave transceiver module 5 and at the back of the millimetre wave transceiver antenna array 52. It should be understood that the millimetre wave transceiver circuit 51 can be located at an arbitrary position as long as the millimetre wave transceiver circuit 51 does not block the transmitting and receiving of the millimetre wave. For example, the millimetre wave transceiver circuit 51 is located above, beneath, on the left, or on the right of the millimetre wave transceiver module 5.

The millimetre wave transceiver antenna array 52 includes at least one row of the millimetre wave transmitting antennas 53 and at least one row of the millimetre wave receiving antennas 54 (the distance between the adjacent rows of the millimetre wave transmitting and receiving antennas 53 and 54 is d, the adjacent distances d can be different from each other). Specifically, the adjacent rows of the millimetre wave transmitting and receiving antennas 53 and 54 can be spaced apart and alternately arranged. Of course, the arrangement of the at least one row of the millimetre wave transmitting or receiving antennas 53 and 54 is not limited that shown by figure 2. The specific arrangement can be chosen as required, for example, the at least one row of the millimetre wave transmitting antennas 53 are all arranged in parallel to each other in one region while the at least one row of the millimetre wave receiving antennas 54 can be arranged in parallel to each other in another region.

In figure 2, preferably and for sake of convenient description, only one row of the millimetre wave transmitting antennas 53 and one row of the millimetre wave receiving antennas 54 are illustrated herein.

The row of the millimetre wave transmitting antennas 53 includes a plurality of millimetre wave transmitting antennas 531 spaced with a first predetermined distance d1 in a row, and the row of the millimetre wave receiving antennas 54 includes a plurality of millimetre wave receiving antennas 541 spaced with a second predetermined distance d2 in a row, wherein the first predetermined distance d1 is identical with or different from the second predetermined distance d2.

In practice, it is common to dispose the first predetermined distance d1 to be identical with the second predetermined distance d2, and the millimetre wave transmitting antenna 531 in one row of the millimetre wave transmitting antennas 53 and the corresponding millimetre wave receiving antenna 541 in its adjacent one row of the millimetre wave receiving antenna array 54 are staggered in a direction (up and down direction of the page in figure 2) perpendicular to the extending direction (left and right direction of the page in figure 2) of one row of the millimetre wave transmitting and/or receiving antennas. In other words, the adjacent millimetre wave transmitting antennas 531 and millimetre wave receiving antennas 541 are not aligned with each other along the up and down direction of the page in figure 2, but staggered apart a certain distance along the left and right direction of the page in figure 2. Of course, the staggered arrangement as shown in figure 2 is not necessary, and the adjacent millimetre wave transmitting antenna 531 and millimetre wave transmitting antenna 541 are aligned with each other along the up and down direction of the page in figure 2.

In an example, the guide rail device 3 can be composed of a single guide rail 31, or can be composed of a plurality of guide rails 31. The latter can enable the millimetre wave transceiver module 5 to move more stably.

In an example, the millimetre wave three dimensional holographic scan imaging apparatus 10 may further comprise a data processing device 2. The data processing device 2 is communicated by wire (for example a wire 8) or wireless to the millimetre wave transceiver module 5 to receive scan data from the millimetre wave transceiver module 5 and to generate a millimetre wave holographic image. The millimetre wave three dimensional holographic scan imaging apparatus 10 may further comprise a display device 1. The display device 1 is communicated by wire (for example a wire 7) or wireless to the data processing device 2 to receive and display the millimetre wave holographic image from the data processing device 2.

In an example, the data processing device 2 is used to generate a control signal and send the control signal to the driver 4, so that the driver 4 drives the millimetre wave transceiver module 5 to move. In another example, the millimetre wave three dimensional holographic scan imaging apparatus 10 may also include a separate controller (not shown) from the data processing device 2, which is used to generate a control signal and send the control signal to the driver 4, so that the driver 4 drives the millimetre wave transceiver module 5 for the scanning movement.

In the example shown in figure 1, the object to be inspected 6 (being a human body as shown in the figure) is located in front of the millimetre wave transceiver module 5. The millimetre wave transceiver module 5 can respectively scan a front face and a back face of the object to be inspected 6, so as to obtain data. Such data is used by the data processing device 2 for generating the entire millimetre wave image of the object to be inspected 6. However, this is not necessary, and it is possible to only inspect the area of interest.

In addition, as shown in the figure, the millimetre wave transceiver module 5 as described in the present invention can be shaped in a form of rectangular or square box, but this case is not necessary. The skilled person in the art can design the shape of the millimetre wave transceiver module 5 as required.

Also, the present invention provides a method for inspecting the human body or the article using a millimetre wave three dimensional holographic scan imaging apparatus 10 as described above. The method includes the following steps of:
locating the object to be inspected such as the human body or the article at an inspection position and setting a millimetre wave transceiver module 5 at its scan beginning position;
by means of the driver 4, driving the millimetre wave transceiver module 5 to move from its scan beginning position to its scan end position along a guide rail device 3 continuously or discontinuously to finish scanning to the human body or the article;
transmitting the data sampled by the millimetre wave transceiver module 5 during the scanning to a data processing device 2, in the scanning and/or after the scanning; and
processing the data received from the millimetre wave transceiver module 5 using the data processing device 2 to generate a millimetre wave holographic image of the human body or the article.

In the above description, the scanning performed by the millimetre wave transceiver module 5 is a plane scan.

As described above, during the scanning process of the millimetre wave transceiver module 5, the scanning performed by the millimetre wave transceiver module 5 can be done at a predetermined speed, a constant speed or a variable speed.

It should be understood that the millimetre wave three dimensional imaging requires the scanning in three dimensions: two in terms of space and one in terms of frequency. The two dimensions in terms of space are respectively a scanning parallel to a translational direction of the millimetre wave transceiver module which is achieved by translational movement of the millimetre wave transceiver module, and a scanning perpendicular to the translational direction of the millimetre wave transceiver module which is achieved by switching the current transmitting antenna and the current receiving antenna. The scanning in terms of frequency is accomplished by changing the frequency of the transmitted and received millimetre wave.

In the scanning, the millimetre wave transceiver module 5 can be continuously or discontinuously moved along the up and down direction of the page in figure 2.

In an implementation, during the scanning, the millimetre wave transceiver module 5 discontinuously moves, wherein as for the same position where the millimetre wave transceiver module 5 is located, the two dimensional scanning for the object to be inspected 6 is performed by changing transmitting frequency of the millimetre wave or altering current transmitting or receiving antenna in the millimetre wave transceiver module 5. The whole three dimensional scanning data are obtained by a combination of the two dimensional scanning and the discontinuous movement of the millimetre wave transceiver module 5.

In another implementation, during the scanning, the millimetre wave transceiver module 5 continuously move, and a three dimensional scanning is performed for the object to be inspected 6, by changing transmitting frequency of the millimetre wave, and altering current transmitting and/or receiving antenna in the millimetre wave transceiver module 5, thereby obtaining the whole three dimensional scanning data from results of the several scans.

In an example, the millimetre wave transceiver module 5 transmits information which is obtained by processing the millimetre wave signal received from one or more receiving antennas 541 in the millimetre wave transceiver antennas array 52, to the data processing device 2 in real time, or transmit the information to the data processing device piecewise after it is buffered, or transmit the information to the data processing device at one time after it is buffered.

In an example, the above method can further and preferably include the following steps: after generating the millimetre wave holographic image of the human body or the article, an automatic identification on whether the human body or the article entrains suspected objects and on the position of the suspected objects is carried out and the identified results are outputted. This is more particularly beneficial to the applications in an airport or customs or the like, which need to rapidly determine the safety risk.

On basis of at least one of the above aspects, the plane scan can be performed for the object to be inspected. Correspondingly, the millimetre wave three dimensional holographic scan imaging apparatus has a relatively small volume. In addition, the imaging apparatus can be made in a rectangle or square shape, and thus has a small footprint and adapts for many occasions, because the millimetre wave transceiver module is shaped in a plate-like profile.

Moreover, the millimetre wave three dimensional holographic scan imaging apparatus in accordance with the present invention has simple and accurate image reconstruction algorithm, thereby improving the imaging speed and accuracy. Further, due to the use of the plane scan type inspection means, it is possible to reduce the length of the antenna array in the millimetre wave transceiver module, and save the cost thereof.

Although the present invention has been explained with reference to the drawings, the embodiments shown in the drawings are only illustrative, instead of limiting the present invention.

Although some embodiments of the general inventive concept are illustrated and explained, it would be appreciated by those skilled in the art that modifications and variations may be made in these embodiments without departing from the principles and spirit of the general inventive concept of the disclosure, the scope of which is defined in the appended claims and their equivalents.

## Claims

1. A millimetre wave three dimensional holographic scan imaging apparatus, comprising:
a millimetre wave transceiver module comprising a millimetre wave transceiver antenna array for transmitting and receiving a millimetre wave signal;
a guide rail device, to which the millimetre wave transceiver module is connected in slidable form, such that the millimetre wave transceiver module is moveable along the guide rail device to perform a scan on an object to be inspected;
wherein the scan performed by the millimetre wave transceiver module is a plane scan.

2. The millimetre wave three dimensional holographic scan imaging apparatus according to claim 1, **characterized in that**,
a transmitting face and a receiving face of the millimetre wave transceiver antenna array both are substantially located onto one same plane, wherein the plane is rectangle-shaped or square-shaped in a cross-sectional view.

3. The millimetre wave three dimensional holographic scan imaging apparatus according to any of claims 1-2, **characterized in that**,
the millimetre wave transceiver module further comprises a millimetre wave transceiver circuit connected to the millimetre wave transceiver antenna array.

4. The millimetre wave three dimensional holographic scan imaging apparatus according to any of claims 1-3, **characterized in that**,
the millimetre wave transceiver antenna array comprises at least one row of millimetre wave transmitting antennas and at least one row of millimetre wave receiving antennas.

5. The millimetre wave three dimensional holographic scan imaging apparatus according to claim 4, **characterized in that**,
the row of millimetre wave transmitting antennas comprises a plurality of millimetre wave transmitting antennas spaced from each other with a first predetermined distance in one row, and the row of millimetre wave receiving antennas comprises a plurality of millimetre wave receiving antennas spaced from each other with a second predetermined distance in one row, wherein the first predetermined distance is identical with or different from the second predetermined distance.

6. The millimetre wave three dimensional holographic scan imaging apparatus according to claim 5, **characterized in that**,
when the first predetermined distance is identical with the second predetermined distance, the millimetre wave transmitting antennas in the row of the millimetre wave transmitting antennas and the corresponding millimetre wave receiving antennas in its adjacent row of the millimetre wave receiving antennas are staggered or aligned, in a direction perpendicular to an extending direction of the row of the millimetre wave transmitting and/or receiving antennas.

7. The millimetre wave three dimensional holographic scan imaging apparatus according to any of claims 1-6, **characterized in that**,
the millimetre wave three dimensional holographic scan imaging apparatus further comprises a driver, by which the millimetre wave transceiver module is connected with the guide rail device, thereby driving the millimetre wave transceiver module to move along the guide rail device; or
the millimetre wave three dimensional holographic scan imaging apparatus further comprises a driver, wherein the millimetre wave transceiver module is directly connected with the guide rail device, and the driver drives the millimetre wave transceiver module to move along the guide rail device.

8. The millimetre wave three dimensional holographic scan imaging apparatus according to any of claims 1-7, **characterized in that**,
the guide rail device is arranged along a vertical direction, a horizontal direction or in any oblique direction; and accordingly the millimetre wave transceiver module moves along a vertical direction, a horizontal direction or in any oblique direction, wherein the guide rail device is composed of one guide rail or a plurality of guide rails parallel to each other.

9. The millimetre wave three dimensional holographic scan imaging apparatus according to any of claims 1-8, **characterized in that**,
the millimetre wave three dimensional holographic scan imaging apparatus further comprises:
a data processing device communicated by wire or wireless to the millimetre wave transceiver module to receive scan data from the millimetre wave transceiver module and to generate a millimetre wave holographic image; and
a display device communicated to the data processing device to receive and display the millimetre wave holographic image from the data processing device.

10. The millimetre wave three dimensional holographic scan imaging apparatus according to claim 9, **characterized in that**,
the data processing device is configured to generate a control signal and transmit it to the driver to allow the driver to drive the millimetre wave transceiver module to move; or the millimetre wave three dimensional holographic scan imaging apparatus further comprises a separate controller with respect to the data processing device, the separate controller configured to generate a control signal and transmit it to the driver to allow the driver to drive the millimetre wave transceiver module to move.

11. A method for inspecting an object to be inspected using a millimetre wave three dimensional holographic scan imaging apparatus as claimed in any of claims 1-10, comprising:
locating the object to be inspected at an inspection position and setting a millimetre wave transceiver module at its scan beginning position;
driving the millimetre wave transceiver module to move from its scan beginning position to its scan end position along a guide rail device continuously or discontinuously to finish scanning to the object to be inspected;
transmitting data sampled by the millimetre wave transceiver module during the scanning to a data processing device, in the scanning and/or after the scanning; and
processing the data received from the millimetre wave transceiver module using the data processing device to generate a millimetre wave holographic image of the object to be inspected,
wherein the scanning performed by the millimetre wave transceiver module is a plane scan.

12. The method according to claim 11, **characterized in that**,
during the scanning, the millimetre wave transceiver module discontinuously moves, wherein as for the same position where the millimetre wave transceiver module is located, two dimensional scanning for the object to be inspected is performed by changing transmitting frequency of the millimetre wave or altering the current transmitting or receiving antenna in the millimetre wave transceiver module; and the whole three dimensional scanning data are obtained by a combination of the two dimensional scanning and the discontinuous movement of the millimetre wave transceiver module.

13. The method according to claim 11, **characterized in that**,
during the scanning, the millimetre wave transceiver module continuously move, and a three dimensional scanning is performed for the object to be inspected, by changing transmitting frequency of the millimetre wave, and altering the current transmitting and/or receiving antenna in the millimetre wave transceiver module, thereby obtaining the whole three dimensional scanning data.

14. The method according to any of claims 11-13, **characterized in that**, the millimetre wave transceiver module transmits information which is obtained by processing the millimetre wave signal received from one or more receiving antennas in the row of the millimetre wave transceiver antennas, to the data processing device in real time, or transmit the information to the data processing device piecewise after it is buffered, or transmit the information to the data processing device at one time transmission after it is buffered.

15. The method according to any of claims 11-14, **characterized in that**, after generating the millimetre wave holographic image of the object to be inspected, an automatic identification on whether the object to be inspected entrains suspected objects and on the position of the suspected objects is carried out and the identified results are outputted.
